# EUROPEAN PATENT SPECIFICATION

(11) **EP 4 145 423 B1**
(45) Date of publication and mention of the grant of the patent: **17.06.2026**
(21) Application number: 22193327.8
(22) Date of filing: 31.08.2022
(51) Int. Cl.: G08G 5/00, G01S 13/72, G01S 13/86, G01S 17/933, G01S 17/66, G01S 13/934

(54) **VEHICLE TRACKING**
FAHRZEUGVERFOLGUNG
SUIVI DE VÉHICULE

(30) Priority: 01.09.2021 IN 202111039544
(43) Date of publication of application: 08.03.2023
(73) Proprietor: Honeywell International Inc., Charlotte, NC 28202 (US)
(72) Inventor: BELAMKONDA, Kameswararao, Charlotte, 28202 (US); DWIVEDI, Vineet, Charlotte, 28202 (US); JUN, YuShin, Charlotte, 28202 (US)
(74) Representative: Haseltine Lake Kempner LLP

(56) References cited:
- EP-B1- 0 883 873
- CN-A- 108 932 301
- US-A1- 2010 231 721
- US-A1- 2018 066 954
- US-A1- 2018 286 258

## Description

### Technical Field

The present disclosure relates to methods, devices, and systems for vehicle tracking.

### Background

Air traffic control (ATC) at an airport can direct aircraft or other vehicles on the ground and aircraft in airspace near the airport, as well as provide advisory services to other aircraft in airspace not controlled by ATC at the airport. Directing aircraft and/or vehicles on the ground and in the air can prevent collisions between aircraft or other vehicles, organize and expedite aircraft traffic, and provide information and/or support for aircraft pilots.

ATC may need to direct many different aircraft and/or vehicles in and around the airport. To direct these aircraft and/or vehicles safely and efficiently, ATC controllers may need to know the type of these aircraft, movement types of these aircraft and/or vehicles, clearance status of these aircraft and/or vehicles, locations of these aircraft and/or vehicles, among other information which may have been given to ATC or identified by different sensors and/or tracking systems. For instance, an ATC controller may need to utilize the aircraft type, movement type, clearance status, and/or callsign to determine information regarding the aircraft and take actions to safely and efficiently direct the aircraft and others at the airport.

This information can be captured and presented to an ATC controller. Certain systems, for example, may capture information regarding vehicles at the airport and transmit such information to an ATC controller. Providing such information to an ATC controller can allow for safe and efficient guidance of vehicles around an airfield of an airport.

EP 0 883 873 B1 relates to an airport monitoring system that processes security related data of airplanes in the air and on the ground, from the moment of their detection during approximation to the stand-still in their parking position. The relevant data are displayed on the monitor of an air-guide in visual form (video) and/or characters or numbers, so that they are used to perform an operational handling of air traffic in the airfield.

US2018/286258 describes a virtual radar system including a vehicle-based mobile device subsystem located in a vehicle, a control station subsystem, and a cloud-based data subsystem comprising a cloud-based database for holding data regarding a plurality of locations of a plurality of vehicles and a plurality of cloud transaction processors in communication with the cloud-based database. The cloud transaction processors calculate the positions of the plurality of vehicles, their trajectories, and the probability of a collision between vehicles and issue a warning to the vehicles in response thereto.

### Brief Description of the Drawings

Figure 1 is an example of an airport including aircraft and vehicles for vehicle tracking, in accordance with one or more embodiments of the present disclosure.
Figure 2 is an example of a primary tracking data, a backup tracking data, a computing device, and mapped data records in accordance with one or more embodiments of the present disclosure.
Figure 3 is an example of a computing device for vehicle tracking, in accordance with one or more embodiments of the present disclosure.

### Detailed Description

Methods, devices, and systems for vehicle tracking are described herein. In some examples, one or more embodiments include a computing device comprising a memory and a processor to execute instructions stored in the memory to receive tracking data for a vehicle at an airport, where the tracking data includes a data record including a number of data fields, determine whether the vehicle is being actively tracked using the tracking data, and generate a mapped data record using the tracking data to track the vehicle at the airport in response to the vehicle being actively tracked.

As mentioned above, ATC controllers and/or others at an airport can utilize information collected by tracking systems at the airport to take actions to safely and efficiently direct aircraft and/or vehicles around an airfield of an airport. Such systems may include sensors such as radar associated with the airport, navigational aids at the airport, cameras, video detection and guidance systems, radio detection, lidar systems, among other types of sensors that can track vehicles within a boundary in the air and on the ground defining the airfield of the airport. Such systems can be utilized to generate information regarding a location of the aircraft and/or vehicle at the airport, a movement type of the aircraft and/or vehicle through the airport, a callsign associated with the aircraft, among other information that may be presented and/or utilized by an ATC controller or other user.

Such sensors can be included in different tracking systems. For example, a primary tracking system may provide such information to an ATC controller, while a backup tracking system may also provide such information to the ATC controller in the event the primary tracking system fails to provide such information. However, such tracking system may not always capture and share such information in every instance. For example, there may be areas on some airfields which are not visible to such tracking system (e.g., buildings or other vehicles or structures may block areas from tracking sensors) so when a vehicle is in such an area, the vehicle may not be visible to tracking system which in turn may cause tracking information about the vehicle to be unavailable. In other examples, other factors may cause vehicle to not be visible to tracking system, such as weather, tracking sensor coverage, etc.

As such, information provided by tracking sensors may include partial or noisy data. Such partial or noisy data may result in partial, duplicate, and/or incorrect information being provided about vehicle at the airfield. For example, a vehicle having a first tracking identifier may be lost temporarily by the tracking sensors, which may result in the first tracking identifier being assigned to a different vehicle, the first tracking identifier being duplicated to multiple vehicles, and/or loss of the first tracking identifier altogether, among other examples. Such partial or noisy data, when presented to an ATC controller, may cause confusion and could lead to unsafe situations on the airfield.

Additionally, information provided by tracking sensors may not always be available. For example, tracking system may stop providing information (e.g., tracking sensor becomes damaged, tracking sensor or data fusion system goes offline, loses power, etc.). While backup tracking system may exist, information provided by backup tracking systems may not follow the same hierarchical format or definitions for data presentation. For example, a primary tracking system may track a vehicle and assign an identifier to be included in a data field, whereas a backup tracking system may track the same vehicle but assign a different identifier to be included in a same data field. Accordingly, parsing information from a backup tracking system, even for the same tracked vehicle, may be difficult and could result in confusion for an ATC controller, which may result in unsafe situations on the airfield.

Vehicle tracking, according to the present disclosure, can allow for a computing device to track vehicles at an airfield of an airport. Such tracking can be accomplished by receiving tracking data and generating mapped data records to track the vehicle at the airfield. The mapped data records can correct for partial or noisy data received from tracking sensors at the airfield, as well as correlate data received from different (e.g., primary and/or backup) tracking sensors to track vehicle at the airfield. Such approaches can allow for an increase in efficiency and safety of airport operations.

In the following detailed description, reference is made to the accompanying drawings that form a part hereof. The drawings show by way of illustration how one or more embodiments of the disclosure may be practiced.

These embodiments are described in sufficient detail to enable those of ordinary skill in the art to practice one or more embodiments of this disclosure. It is to be understood that other embodiments may be utilized and that process, electrical, and/or structural changes may be made without departing from the scope of the present disclosure.

As will be appreciated, elements shown in the various embodiments herein can be added, exchanged, combined, and/or eliminated so as to provide a number of additional embodiments of the present disclosure. The proportion and the relative scale of the elements provided in the figures are intended to illustrate the embodiments of the present disclosure and should not be taken in a limiting sense.

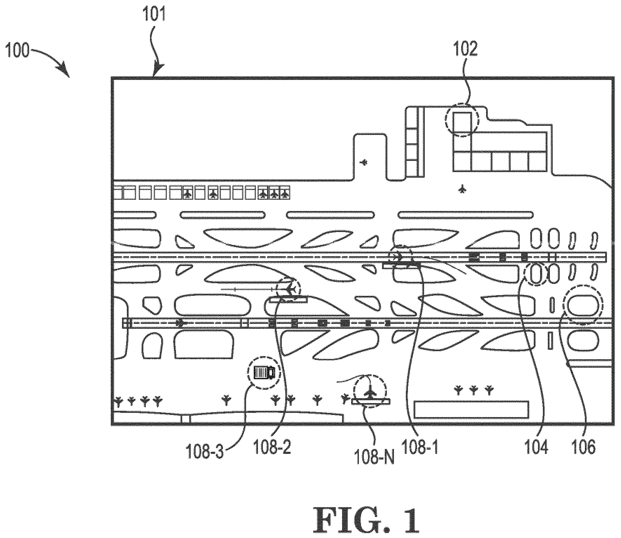

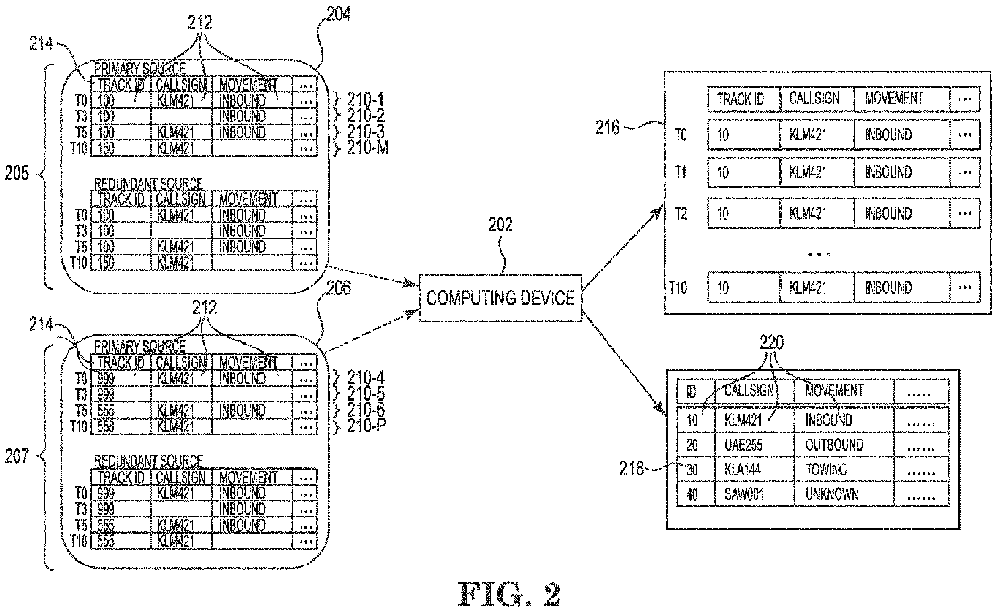

The figures herein follow a numbering convention in which the first digit or digits correspond to the drawing figure number and the remaining digits identify an element or component in the drawing. Similar elements or components between different figures may be identified by the use of similar digits. For example, 102 may reference element "02" in Figure 1, and a similar element may be referenced as 202 in Figure 2.

As used herein, "a", "an", or "a number of" something can refer to one or more such things, while "a plurality of" something can refer to more than one such things. For example, "a number of components" can refer to one or more components, while "a plurality of components" can refer to more than one component. Additionally, the designators "M", "N", and "P" as used herein particularly with respect to reference numerals in the drawings, indicates that a number of the particular feature so designated can be included with a number of embodiments of the present disclosure. This number may be the same or different between designations.

Figure 1 is an example of an airport 100 including vehicles 108 for vehicle tracking, in accordance with one or more embodiments of the present disclosure. The airport 100 can include an airfield 101, a computing device 102, a primary tracking system 104, a backup tracking system 106, and vehicles 108-1, 108-2, 108-3, 108-N (referred to collectively herein as vehicles 108).

As illustrated in Figure 1, the airport 100 can include a computing device 102. As used herein, the term "computing device" refers to an electronic system having a processing resource, memory resource, and/or an application-specific integrated circuit (ASIC) that can process information. Examples of computing devices can include, for instance, a laptop computer, a notebook computer, a desktop computer, a server, networking equipment (e.g., router, switch, etc.), and/or a mobile device, among other types of computing devices. As used herein, a mobile device can include devices that are (or can be) carried and/or worn by a user. For example, a mobile device can be a phone (e.g., a smart phone), a tablet, a personal digital assistant (PDA), smart glasses, and/or a wrist-worn device (e.g., a smart watch), among other types of mobile devices.

For instance, the computing device 102 can be a computing device located at the airport 100. The computing device 102 can enable a user, such as an ATC controller, ground controller, and/or any other type of user to utilize the computing device 102 for vehicle tracking according to embodiments of the present disclosure. The computing device 102 can be located at the airport 100 to be utilized for vehicle tracking as is further described herein.

The airport 100 can include different vehicles 108. Vehicles 108 may include vehicles associated with the airport 100. For example, vehicles 108 may include aircraft (e.g., vehicles 108-1, 108-2, 108-N), other vehicles (e.g., vehicle 108-3) including support vehicles (e.g., baggage carts, fuel trucks, maintenance vehicles, etc.), among other types of vehicles 108 on an airfield 101 of an airport 100.

As illustrated in Figure 1, the airport 100 can include a primary tracking system 104 and/or a backup tracking system 106. As used herein, the term "tracking system" refers to a device or collection of devices to detect events and/or changes in an airfield environment, and process and/or analyze the detected events and/or changes. For example, the primary tracking system 104 and/or the backup tracking system 106 can include sensors that can detect the presence of vehicles 108, determine information about those vehicles 108, track movements of the vehicles, and transmit such tracking data to the computing device 102 for analysis. In addition, the primary tracking system 104 and/or the backup tracking system 106 can include data fusion systems to process and/or analyze the data from the detected events and/or changes by integrating data received from multiple sensors (e.g., as part of the primary tracking system 104 and/or the backup tracking system 106) to produce output data to be utilized to track movements of the vehicles on the airfield 101. The primary tracking system 104 and the backup tracking system 106 can include various sensors including radar associated with the airport, navigational aids at the airport, cameras, video detection and guidance systems, radio detection, lidar systems, among other types of sensors. The primary tracking system 104 and/or the backup tracking system 106 can fuse input data from the various sensors mentioned above to produce output data to be utilized by the computing device 102, as is further described herein. Additionally, in some examples, the backup tracking system 106 can be an input to the primary tracking system 104 (e.g., the primary tracking system 104 receives data from the backup tracking system 106).

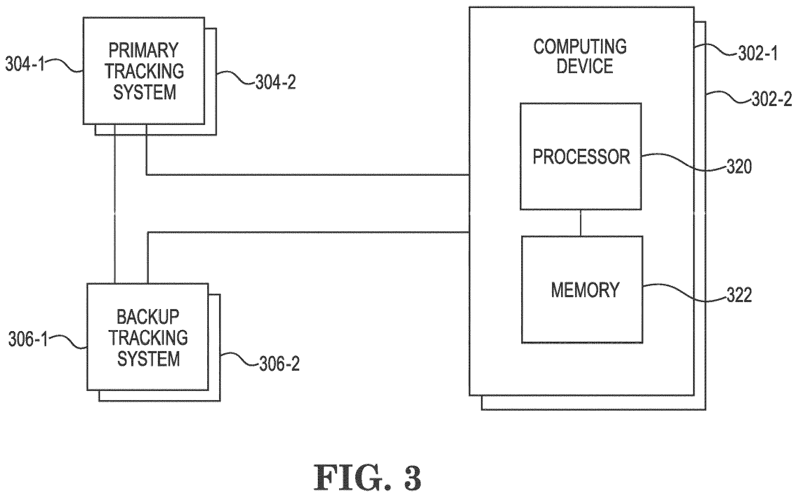

Although not illustrated in Figure 1 for clarity and so as not to obscure embodiments of the present disclosure, the primary tracking system 104 can include redundant primary tracking systems (e.g., as further illustrated in connection with Figure 3). For example, the redundant primary tracking system can include redundant sensors and/or a redundant fusion system to fuse the data from the sensors associated with the primary tracking system 104 and/or from redundant sensors associated with the redundant primary tracking system. Additionally, the backup tracking system 106 can include redundant backup systems (e.g., as further illustrated in connection with Figure 3). For example, the redundant backup tracking system can include redundant sensors and/or a redundant fusion system to fuse the data from the sensors associated with the backup tracking system 106 and/or from redundant sensors associated with the redundant backup tracking system. Further, in some examples, the computing device 102 may directly receive data from the sensors associated with primary tracking system 104, the redundant primary tracking system, the backup tracking system 106, and/or the redundant backup tracking system.

As mentioned above, the primary tracking system 104 and/or the backup tracking system 106 can transmit fused tracking data to the computing device 102. Accordingly, the computing device 102 can receive fused tracking data for a vehicle 108 at the airport 100. For example, the primary tracking system 104 may track the vehicle 108-1 via radar and lidar, fuse the data from the radar and lidar sensors into fused tracking data, and transmit such fused tracking data to the computing device 102 to be utilized for vehicle tracking, as is further described herein.

Although the primary tracking system 104 is described above as tracking the vehicle 108-1 via radar and lidar and transmitting such fused tracking data to the computing device 102, embodiments of the present disclosure are not so limited. For example, in an instance in which the primary tracking system 104 is unavailable (e.g., weather, primary tracking system 104 is faulty, etc.), the backup tracking system 106 may transmit fused tracking data to the computing device 102. The backup tracking system 106 may also utilize a radar sensor, or any other type of sensor mentioned above or otherwise to track the vehicle 108-1 (or any of the other vehicles 108 at the airport 100). Further, the primary tracking system 104 may include any other type of sensor mentioned above or otherwise to track the vehicle 108-1 (or any other of the vehicles 108 at the airport 100).

The tracking data received by the primary tracking system 104 and/or the backup tracking system 106 of the vehicle 108-1 may include a data record including a number of data fields. As used herein, the term "data record" refers to a collection of data fields that may include units of information. As used herein, the term "data field" refers to a location in which information is stored. For example, the data record received by the computing device 102 from the primary tracking system 104 and/or the backup tracking system 106 may include a data record that includes data stored in the number of data fields.

In some examples, the data stored in the data fields included in the data record can include a tracking identifier for the vehicle 108-1. For example, the primary tracking system 104 may assign a tracking identifier a value of "100" to the vehicle 108-1. The tracking identifier can be a value assigned to a particular vehicle 108-1 the primary tracking system 104 is tracking in order to distinguish the vehicle 108-1 from other vehicles 108-2, 108-N which may be at the airport 100 and being tracked by the primary tracking system 104.

The tracking identifier for the vehicle 108-1 may be different based on the tracking sensor tracking the vehicle. For example, the backup tracking system 106 may also track the vehicle 108-1 but assign the vehicle 108-1 a tracking identifier value of "999". Accordingly, it can be important for the computing device 102 to correlate such information correctly, as is further described in connection with Figure 2.

In some examples, the data stored in the data fields included in the data record can include a callsign for the vehicle 108-1. For example, the primary tracking system 104 may determine the callsign of vehicle 108-1 to be "KLM421" and record the callsign of vehicle 108-1 in the data field included in the data record. Additionally, the primary tracking system 104 (e.g., or the backup tracking system 106) may determine the callsign of vehicle 108-2 to be "UAE255" and record the callsign of vehicle 108-2 in a different data field included in a different data record.

In some examples, the data stored in the data fields included in the data record can include a movement type for the vehicle 108-1. For example, the primary tracking system 104 (e.g., or the backup tracking system 106) may determine the movement type for the vehicle 108-1 to be "inbound" (e.g., the vehicle 108-1 is arriving at the airport 100) and can record the movement type of the vehicle 108-1 in a data field included in a data record.

Although the movement type for vehicle 108 is described above as being "inbound", embodiments of the present disclosure are not so limited. For example, movement types for vehicles 108 can additionally include "outbound" (e.g., the vehicle 108 is departing from the airport 100), "towing" (e.g., the vehicle 108 is being towed on the airfield 101 at the airport 100), "deicing" (e.g., the vehicle 108 is being deiced on the airfield 101 at the airport 100), "unknown" (e.g., the movement type of the vehicle 108 is unknown), among other types of movement types.

The computing device 102 can receive primary tracking data (e.g., or backup tracking data) for the vehicle 108 at the airport. When such data is received, the computing device 102 can cluster the tracking data via machine learning. For example, the computing device 102 may utilize a K-Means clustering machine learning algorithm to generate a number of data clusters. Such data clusters can be utilized to cluster tracking data for different vehicles having different tracking identifiers, callsigns, movement types, or other data included in data records received by the computing device 102 in addition to k-Nearest Neighbors (k-NN) machine learning algorithms, as is further described herein. Accordingly, tracking data received by the computing device 102 (e.g., at a later time) may be matched to the data clusters to generate mapped data records to track vehicle 108, as is further described in connection with Figure 2.

The computing device 102 can determine whether the vehicle 108-1 is being actively tracked using the tracking data. For example, the computing device 102 may determine, based on the tracking data indicating the vehicle 108-1 is being actively tracked by a tracking sensor (e.g., the primary tracking system 104 and/or the backup tracking system 106). Using the tracking data, the computing device 102 can generate a mapped data record (e.g., utilizing the received data fields) in response to the vehicle being actively tracked, as is further described in connection with Figure 2.

The generated mapped data record can be utilized to track a location of the vehicle 108-1 at the airport 100, a movement type of the vehicle 108-1 through the airport 100, and/or a clearance status of the vehicle 108-1 at the airport. For example, the location of the vehicle 108-1 can be determined to be on a runway of the airfield 101, where the movement type of the vehicle 108-1 may be inbound and/or taxiing, and the clearance status of the vehicle 108-1 may be determined to be cleared to parking stand.

Such information may be provided to a user via a user interface of the computing device 102. For example, the user interface of the computing device 102 can display at least one of the location of the vehicle 108-1, the movement type of the vehicle 108-1, and/or the clearance status of the vehicle 108-1 to a user. Accordingly, a user, such as an ATC controller or other user, may be able to utilize the information in order to efficiently and safely direct vehicles around the airfield of the airport.

Figure 2 is an example of primary tracking data 205, a backup tracking data 207, a computing device 202, and mapped data records 216 in accordance with one or more embodiments of the present disclosure. The tracking data can include data records 210-1, 210-2, 210-3, 210-M, 210-4, 210-5, 210-6, and 210-P (referred to collectively herein as data records 210), data fields 212, and an identifier 214.

As previously described in connection with Figure 1, the computing device 202 can receive primary tracking data 205 from a primary tracking system and/or backup tracking data 207 from a backup tracking system. As illustrated in Figure 2, the primary tracking data 205 can include data records 210, where each data record 210 can include data fields 212. For example, data record 210-1 can include data fields 212 including an identifier 214 associated with a vehicle, such as an aircraft, being tracked at the airport, a callsign of the aircraft, a movement type of the aircraft, etc. Further, although not illustrated in Figure 2 for clarity and so as not to obscure embodiments of the present disclosure, the data fields 212 can further include other information such as a clearance status of the aircraft, the type of aircraft, the class of aircraft, etc. The backup tracking data 207 can include similar information.

In some instances, such primary tracking data 205 may include partial or noisy data. This partial or noisy data may be due to the aircraft being tracked not being visible to tracking sensors on the airfield (e.g., due to the aircraft being in an area not visible to tracking sensors, the tracking sensors being temporarily unavailable, weather preventing the tracking sensors from sensing the aircraft, etc.). One possible result of partial or noisy data may be that the primary tracking data 205 has missing information.

Accordingly, the computing device 202 can determine whether the primary tracking data 205 has a missing data field of the number of data fields. For example, as illustrated in Figure 2, the first data record 210-1 received may include the data fields 212 which all have recorded information about the aircraft being tracked (e.g., the identifier 214 (e.g., "100"), the callsign as "KLM421", and the movement type as "INBOUND"). However, the next data record 210-2 received may include the data fields 212 including the identifier 214 "100", the callsign data field missing, but the movement type as "INBOUND". Accordingly, the computing device 202 can determine there is a missing data field 212 in the data record 210-2. In response, the computing device 202 can generate data for the missing data field 212 via machine learning, as is further described herein.

In order to generate the data for the missing data field 212, the computing device 202 can determine whether the missing data field is a same data field included in a previously received data record 210. For example, the computing device 202 can utilize K-Means clustering machine learning to compare the data record 210-2 to previously generated data clusters including tracking data for different aircraft. Based on the comparison yielding a match, the computing device 202 can determine the missing data field 212 in the data record 210-2 is the same data field 212 included in the previously received data record 210-1.

In response to determining the missing data field 212 is the same data field 212 included in the previously received data record 210-1 (e.g., the missing data field 212 corresponding to the existing data field 212), the computing device 202 can determine whether the aircraft associated with the tracking data 205 including the data record 210-2 is a same aircraft associated with the previously received data record 210-1 using k-NN machine learning. For example, the computing device 202 has to determine whether the aircraft being tracked that is associated with the data records 210-1 and 210-2 is the same aircraft in order to prevent multiple aircraft at the airport from being associated with the same tracking data.

The computing device 202 can determine whether the aircraft associated with the primary tracking data 205 including the data record 210-2 is a same aircraft associated with the previously received data record 210-1 using k-NN machine learning. For example, the data record 210-2 can be compared to parameters associated with the k-NN machine learning to determine the best match, which may be the aircraft associated with the previously received data record 210-1. This may be done to ensure that the aircraft associated with the previously received data record 210-1 is the same aircraft associated with the received data record 210-2 in order to prevent multiple aircraft being assigned the same identifier 214, which may cause confusion for ATC controllers or other users.

If the computing device 202 determines the aircraft associated with the primary tracking data 205 including the data record 210-2 is the same aircraft associated with the previously received data record 210-1, the computing device 202 can generate the mapped data record 216 using the tracking data 205 and the generated data. The computing device 202 can, accordingly, utilize the existing data field 212 to generate the missing data field 212 to generate the mapped data record 216. Generating the mapped data record 216 can include correlating the received primary tracking data 205 as described above (e.g., generating data for missing data fields) in order to correctly track aircraft at the airport and allow for efficient guidance of aircraft at the airport by ATC controllers or other users.

If the computing device 202 determines the aircraft associated with the primary tacking data 205 including the data record 210-2 is not the same aircraft associated with the previously received data record 210-1, the computing device 202 can refrain from generating the mapped data record 216 using the primary tracking data 205 and the generated data. For example, if the computing device 202 determines (e.g., using the k-NN machine learning described above) the data record 210-2 has a best match that is not the previously received data record 210-1, the computing device 202 can assign a new identifier 214 to the data record 210-2.

In an example in which the computing device 202 determines the missing data field 212 is not the same data field 212 included in the previously received data record 210-1, the computing device 202 can assign a new identifier 214 to the data record 210-2 and generate a cluster associated with the data record 210-2. The computing device 202 can then generate a mapped data record to track the aircraft associated with the data record 210-2.

As described above, the computing device 202 can correlate data records 210-1, 210-2 received by the computing device 202 from the primary tracking data 205 to generate the mapped data record 216. Such correlation can prevent situations where an identifier 214 are assigned to a different aircraft, the identifier 214 or other data fields 212 are assigned to multiple aircraft, loss of the data records 210 altogether, among other examples. For example, the computing device 202 can correlate data records 210-2 and 210-3 in an instance where the identifier 214 changes from "100" in data record 210-2 to "150" in data record 210-3. In other words, the computing device 202 can ensure that the primary tracking data 205 and/or the backup tracking data 207 are correlated such that when the computing device 202 generates the mapped data records 216, the mapped data records 216 are tracking the correct aircraft at the airfield and the information associated with those aircraft (e.g., identifier, callsign, movement type, etc.) are correct.

As illustrated in Figure 2, the primary tracking data 205 can include a primary source of data including the data records 210. However, in some embodiments, the primary tracking data 205 can further include a redundant data source which can also provide data records that are the same as the data records 210 included in the primary data source.

As previously described in connection with Figure 1, the airfield can include a primary tracking system which can provide primary tracking data 205. Additionally, the airfield can include a backup tracking system to provide backup tracking data 207. In an example in which the primary tracking system ceases to provide data to the computing device 202, the computing device 202 can utilize the backup tracking data 207 from the backup tracking system. In such an instance, the computing device 202 has to make sure the backup tracking data 207 correlates with tracking data associated with an aircraft being tracked, as hierarchical format or definitions for data presentation may differ between tracking sensors, as is further described herein.

The computing device 202 can receive, in response to primary tracking data 205 not being received for an aircraft at the airport from the primary tracking system, the backup tracking data 207 for the aircraft from the backup tracking system. Similar to the primary tracking data 205, the backup tracking data 207 can include data records 210-4, 210-5, 210-6, and 210-P including a number of data fields 212.

As described above, in some instances the backup tracking data 207 can also include partial or noisy data. The computing device 202 can generate a mapped data record 216 according to the method described above.

As mentioned above, in some instances the backup tracking data 207 may have a different hierarchical format or definition for data presentation than the primary tracking data 205. Accordingly, the computing device 202 can utilize the data clusters 218 to correlate the data, as is further described herein.

As previously mentioned in connection with Figure 1, the computing device 202 can generate data clusters 218 as data is received by the computing device 202. Such data clusters 218 can be utilized to correlate data from different tracking sensors, as is further described herein.

For example, when the backup tracking data 207 is received, the computing device 202 can match a data field 212 of a data record 210-4 to a data field 220 included in a cluster of a number of data clusters 218 associated with a number of aircraft at the airport. One of the clusters 218 may include a number of sub-clusters comprising the data fields 220. For instance, one of the clusters may include sub-clusters including the ID "e.g., 10", callsign "e.g., KLM421", and/or movement "e.g., INBOUND" that make up the data fields 220. The computing device 202 can match the callsign "KLM421" included in the data field 212 of the data record 210-4 with the callsign "KLM421" included in the data field 220 of the data clusters 218 associated with the aircraft at the airport using a K-Means clustering machine learning algorithm. Based on the match, the computing device 202 can generate the mapped data record 216 from the backup tracking data 207.

As described above, vehicle tracking according to the present disclosure can allow for a computing device to track an aircraft at an airfield of an airport. However, embodiments of the present disclosure are not so limited. For example, vehicle tracking according to the present disclosure can allow for tracking of any vehicles at an airport (e.g., aircraft, ground-based vehicles, etc.).

As such, aircraft tracking according to the present disclosure can allow for a computing device to track aircraft at an airfield of an airport utilizing tracking data from various tracking sensors on the airfield. The computing device can correlate such tracking data when, for instance, the received data is partial and/or noisy data, as well as when such data comes from multiple different tracking sensors. Such an approach can allow for an increase in efficiency of ATC controller or other user's duties, as well as increase the safety of airport operations.

Figure 3 is an example of a computing device 302-1 for vehicle tracking, in accordance with one or more embodiments of the present disclosure. The computing device 302-1 can include a processor 320 and a memory 322. The computing device 302-1 can be connected to the primary tracking system 304-1 and/or the backup tracking system 306-1.

The memory 322 can be any type of storage medium that can be accessed by the processor 320 to perform various examples of the present disclosure. For example, the memory 322 can be a non-transitory computer readable medium having computer readable instructions (e.g., computer program instructions) stored thereon that are executable by the processor 320 for vehicle tracking in accordance with the present disclosure.

The memory 322 can be volatile or nonvolatile memory. The memory 322 can also be removable (e.g., portable) memory, or non-removable (e.g., internal) memory. For example, the memory 322 can be random access memory (RAM) (e.g., dynamic random access memory (DRAM) and/or phase change random access memory (PCRAM)), read-only memory (ROM) (e.g., electrically erasable programmable read-only memory (EEPROM) and/or compact-disc read-only memory (CD-ROM)), flash memory, a laser disc, a digital versatile disc (DVD) or other optical storage, and/or a magnetic medium such as magnetic cassettes, tapes, or disks, among other types of memory.

Further, although memory 322 is illustrated as being located within the computing device 302-1, embodiments of the present disclosure are not so limited. For example, memory 322 can also be located internal to another computing resource (e.g., enabling computer readable instructions to be downloaded over the Internet or another wired or wireless connection).

As illustrated in Figure 3, the computing device 302-1 can be connected to the primary tracking system 304-1 and/or the backup tracking system 306-1. The primary tracking system 304-1 and/or the backup tracking system 306-1 can be connected to the computing device 302-1 via a wired and/or wireless network relationship. Examples of such a network relationship can include a local area network (LAN), wide area network (WAN), personal area network (PAN), a distributed computing environment (e.g., a cloud computing environment), storage area network (SAN), Metropolitan area network (MAN), a cellular communications network, Long Term Evolution (LTE), visible light communication (VLC), Bluetooth, Worldwide Interoperability for Microwave Access (WiMAX), Near Field Communication (NFC), infrared (IR) communication, Public Switched Telephone Network (PSTN), radio waves, and/or the Internet, among other types of network relationships.

Additionally, the computing device 302-1 can be connected to the redundant primary tracking system 304-2 and/or the redundant backup tracking system 306-2. Further, the computing device 302-1 can include a redundant backup computing device 302-2 to perform the same functions as described above.

Although specific embodiments have been illustrated and described herein, those of ordinary skill in the art will appreciate that any arrangement calculated to achieve the same techniques can be substituted for the specific embodiments shown. This disclosure is intended to cover any and all adaptations or variations of various embodiments of the disclosure.

It is to be understood that the above description has been made in an illustrative fashion, and not a restrictive one. Combination of the above embodiments, and other embodiments not specifically described herein will be apparent to those of skill in the art upon reviewing the above description.

The scope of the various embodiments of the disclosure includes any other applications in which the above structures and methods are used. Therefore, the scope of various embodiments of the disclosure should be determined with reference to the appended claims, along with the full range of equivalents to which such claims are entitled.

In the foregoing Detailed Description, various features are grouped together in example embodiments illustrated in the figures for the purpose of streamlining the disclosure. This method of disclosure is not to be interpreted as reflecting an intention that the embodiments of the disclosure require more features than are expressly recited in each claim.

Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. A computing device (102, 202, 302) for vehicle tracking, comprising:
a memory (322); and
a processor (320) configured to execute instructions stored in the memory (322) to:
receive tracking data for a vehicle (108) at an airport (100), wherein the tracking data includes primary tracking data (205) from a primary tracking source at the airport (100) including a data record (210) including a number of data fields (212), the number of data fields (212) including a tracking identifier for the vehicle (108), a callsign for the vehicle (108), and a vehicle movement type for the vehicle (108);
in response to receiving the primary tracking data (205), determine whether the vehicle (108) is being actively tracked using the primary tracking data (205);
determine whether the data record (210) included in the primary tracking data (205) has a missing data field;
generate, in response to determining the data record (210) included in the primary tracking data (205) has a missing data field (212), data for the missing data field (212) via machine learning by:
in response to determining whether the missing data field is a same data field included in a previously recorded data record (210-1), determine that the vehicle (108) is a same vehicle associated with a previously received data record (210-1); and in response to determining that the vehicle is the same vehicle as in the previously stored data record,
generate a mapped data record (216) using the primary tracking data (205) and the generated data for the missing data field (212); and
refrain from generating the mapped data record (216) and assign a new identifier to the data record (210) responsive to a determination that the vehicle (108) is not the same vehicle associated with the previously received data record (210-1).

2. The computing device (102, 202, 302) of claim 1, wherein the processor (320) is configured to execute the instructions to generate, in response to determining the data record (210) included in the primary tracking data (205) has the missing data field (212), the data for the missing data field (212) by:
determining that the missing data field (212) is a same data field (212) included in a previously received data record (210-1) based on a comparison yielding a match, wherein the comparison is made between the data record (210) and data clusters generated by K-Means clustering machine learning using the previously received data record (210-1);
determining that the vehicle (108) being tracked is a same vehicle associated with the previously received data record (210-1) based on a determination, using k-NN machine learning, that the aircraft associated with the previously received data record (210-1) is a best match for the vehicle (108); and
utilize the same data field (212) to generate data for the missing data field (212).

3. The computing device (102, 202, 302) of claim 1, wherein receiving the tracking data includes receiving backup tracking data (207) including a data record (210) from a backup tracking data source at the airport (100) and in response to receiving the backup tracking data (207), the processor (320) is configured to execute the instructions to determine whether the vehicle (108) is being actively tracked using the backup tracking data (207).

4. The computing device (102, 202, 302) of claim 3, wherein the processor (320) is configured to execute the instructions to:
determine whether the data record (210) included in the backup tracking data (207) has a missing data field (212), wherein the data record (210) includes a first identifier (214); and
in response to determining the data record (210) included in the backup tracking data (207) has a missing data field (212), generate data for the missing data field (212) by:
determining that a data field (212) including a first identifier (214) included in the backup tracking data (207) corresponds to an existing data field (212) based on a comparison yielding a match, wherein the comparison is made between the data record included in the backup training data (207) and data clusters generated by K-Means clustering machine learning using tracking data for different vehicles at the airport;
in response to the data field (212) corresponding to the existing data field (212), utilize the existing data field (212) to generate data for the mapped data record (216).

5. The computing device (102, 202, 302) of claim 4, wherein the processor (320) is configured to execute the instructions to:
determine whether a data field (212) including a first identifier (214) included in the backup tracking data (207) corresponds to an existing data field (212) by:
comparing the data record included in the backup training data (207) to data clusters generated by K-Means clustering machine learning using tracking data for different vehicles at the airport;
in response to the comparison yielding a match, determine the data field (212) is a same data field included in the existing data field (212);
in response to the data field (212) corresponding to the existing data field (212), utilize the existing data field (212) to generate the mapped data record (216); and
in response to the data field (212) not corresponding to the existing data field (212), assign a second identifier (214) to the data record (210) including the data field (212).

6. The computing device (102, 202, 302) of claim 5, wherein the processor (320) is configured to generate the mapped data record (216) using at least one of the backup tracking data (207), the generated data for the missing data field (212), the data record (210) having the first identifier (214), and the data record (210) having the second identifier (214).

7. A non-transitory computer readable medium having computer-readable instructions stored thereon that are executable by a processor (320) to:
receive tracking data for a vehicle (108) at an airport (100), wherein the tracking data includes primary tracking data (205) from a primary tracking source at the airport (100) including a data record (210) including a number of data fields (212), the number of data fields (212) including a tracking identifier for the vehicle (108), a callsign for the vehicle (108), and a vehicle movement type for the vehicle (108);
determine whether the data record (210) included in the primary tracking data (205) has a missing data field (212) from the number of data fields (212);
in response to determining the data record (210) included in the primary tracking data (205) has a missing data field (212), generate data for the missing data field (212) via machine learning by:
in response to determining whether the missing data field is a same data field included in a previously recorded data record (210), determine that the vehicle (108) is a same vehicle associated with a previously received data record (210-1); and in response to determining that the vehicle is the same vehicle as in the previously stored data record,
generate a mapped data record (216) using the primary tracking data and the generated data for the missing data field (212) and
refrain from generating the mapped data record (216) and assign a new identifier to the data record (210) responsive to a determination that the vehicle (108) is not the same vehicle associated with the previously received data record (210-1).

8. The computer readable medium of claim 7, wherein generating the data for the missing data field (212) includes determining whether the missing data field (212) is a same data field included in a previously received data record (210) via the K-Means clustering machine learning.

9. The computer readable medium of claim 8, wherein in response to determining the missing data field (212) is the same data field included in the previously received data record (210), the processor (320) is to execute the instructions to determine whether the vehicle associated with the tracking data including the data record (210) is a same vehicle associated with the previously received data record (210) using k-nearest neighbors (k-NN) machine learning.

10. The computer readable medium of claim 8, wherein in response to determining the missing data field (212) is not the same data field included in the previously received data record (210), the processor (320) is to execute the instructions to generate a cluster associated with the data record (210).

11. The computer readable medium of claim 7, wherein:
the mapped data record (216) is utilized to track at least one of a location of the vehicle (108) at the airport (100), a movement type of the vehicle (108) through the airport (100), and a clearance status of the vehicle (108); and
the processor (320) is to execute the instructions to display, via a user interface, at least one of the location of the vehicle (108) at the airport (100), the movement type of the vehicle (108) through the airport (100), and the clearance status of the vehicle (108).

## Patentansprüche

1. Rechenvorrichtung (102, 202, 302) zum Tracken eines Fahrzeugs, umfassend:
einen Speicher (322); und
einen Prozessor (320), der dazu konfiguriert ist, in dem Speicher (322) gespeicherte Anweisungen dazu auszuführen:
Trackingdaten für ein Fahrzeug (108) an einem Flughafen (100) zu empfangen, wobei die Trackingdaten primäre Trackingdaten (205) von einer primären Trackingquelle an dem Flughafen (100) beinhalten, die einen Datensatz (210) beinhalten, der eine Anzahl von Datenfeldern (212) beinhaltet, wobei die Anzahl von Datenfeldern (212) eine Trackingkennung für das Fahrzeug (108), ein Rufzeichen für das Fahrzeug (108) und einen Fahrzeugbewegungstyp für das Fahrzeug (108) beinhalten;
als Antwort auf das Empfangen der primären Trackingdaten (205) zu bestimmen, ob das Fahrzeug (108) aktiv getrackt wird, unter Verwendung der primären Trackingdaten (205);
zu bestimmen, ob der in den primären Trackingdaten (205) beinhaltete Datensatz (210) ein fehlendes Datenfeld aufweist;
als Antwort auf das Bestimmen, dass der in den primären Trackingdaten (205) beinhaltete Datensatz (210) ein fehlendes Datenfeld (212) aufweist, Daten für das fehlende Datenfeld (212) über Maschinenlernen durch Folgendes zu erzeugen:
als Antwort auf das Bestimmen, ob das fehlende Datenfeld ein gleiches Datenfeld ist, das in einem zuvor aufgenommenen Datensatz (210-1) beinhaltet ist, zu bestimmen, dass das Fahrzeug (108) ein gleiches Fahrzeug ist, das einem zuvor empfangenen Datensatz (210-1) zugehörig ist; und als Antwort auf das Bestimmen, dass das Fahrzeug das gleiche Fahrzeug wie in dem zuvor gespeicherten Datensatz ist,
für das fehlende Datenfeld (212) unter Verwendung der primären Trackingdaten (205) und der erzeugten Daten einen zugeordneten Datensatz (216) zu erzeugen; und
antwortend auf eine Bestimmung, dass das Fahrzeug (108) nicht das gleiche Fahrzeug ist, das dem zuvor empfangenen Datensatz (210-1) zugehörig ist, das Erzeugen des zugeordneten Datensatzes (216) zu unterlassen und dem Datensatz (210) eine neue Kennung zuzuweisen.

2. Rechenvorrichtung (102, 202, 302) nach Anspruch 1, wobei der Prozessor (320) dazu konfiguriert ist, die Anweisungen dazu auszuführen, als Antwort auf das Bestimmen, dass der in den primären Trackingdaten (205) beinhaltete Datensatz (210) das fehlende Datenfeld (212) aufweist, die Daten für das fehlende Datenfeld (212) durch Folgendes zu erzeugen:
Bestimmen, dass das fehlende Datenfeld (212) ein gleiches Datenfeld (212) ist, das in einem zuvor empfangenen Datensatz (210-1) beinhaltet ist, auf Basis darauf, dass ein Vergleich eine Übereinstimmung ergibt, wobei der Vergleich zwischen dem Datensatz (210) und Datenclustern erfolgt, die durch K-Means-Clustering-Maschinenlernen unter Verwendung des zuvor empfangenen Datensatzes (210-1) erzeugt werden;
Bestimmen, dass das Fahrzeug (108), das getrackt wird, ein gleiches Fahrzeug ist, das dem zuvor empfangenen Datensatz (210-1) zugehörig ist, auf Basis einer Bestimmung unter Verwendung von K-NN-Maschinenlernen, dass das dem zuvor empfangenen Datensatz (210-1) zugehörige Flugzeug die beste Übereinstimmung für das Fahrzeug (108) ist; und
das gleiche Datenfeld (212) zu benutzen, um Daten für das fehlende Datenfeld (212) zu erzeugen.

3. Rechenvorrichtung (102, 202, 302) nach Anspruch 1, wobei das Empfangen der Trackingdaten das Empfangen von Backup-Trackingdaten (207) beinhaltet, die einen Datensatz (210) von einer Backup-Trackingdatenquelle an dem Flughafen (100) beinhalten, und als Antwort auf das Empfangen der Backup-Trackingdaten (207) der Prozessor (320) dazu konfiguriert ist, die Anweisungen dazu auszuführen, zu bestimmen, ob das Fahrzeug (108) aktiv getrackt wird, unter Verwendung der Backup-Trackingdaten (207).

4. Rechenvorrichtung (102, 202, 302) nach Anspruch 3, wobei der Prozessor (320) dazu konfiguriert ist, die Anweisungen dazu auszuführen:
zu bestimmen, ob der in den Backup-Trackingdaten (207) beinhaltete Datensatz (210) ein fehlendes Datenfeld (212) aufweist, wobei der Datensatz (210) eine erste Kennung (214) beinhaltet, und
als Antwort auf das Bestimmen, dass der in den Backup-Trackingdaten (207) beinhaltete Datensatz (210) ein fehlendes Datenfeld (212) aufweist, Daten für das fehlende Datenfeld (212) durch Folgendes zu erzeugen:
Bestimmen, dass ein Datenfeld (212), das eine in den Backup-Trackingdaten (207) beinhaltete erste Kennung (214) beinhaltet, einem bestehenden Datenfeld (212) entspricht, auf Basis darauf, dass ein Vergleich eine Übereinstimmung ergibt, wobei der Vergleich zwischen dem in den Backup-Trainingdaten (207) beinhalteten Datensatz und Datenclustern erfolgt, die durch K-Means-Clustering-Maschinenlernen unter Verwendung von Trackingdaten für unterschiedliche Fahrzeuge an dem Flughafen erzeugt werden;
als Antwort darauf, dass das Datenfeld (212) dem bestehenden Datenfeld (212) entspricht, das bestehende Datenfeld (212) zu benutzen, um Daten für den zugeordneten Datensatz (216) zu erzeugen.

5. Rechenvorrichtung (102, 202, 302) nach Anspruch 4, wobei der Prozessor (320) dazu konfiguriert ist, die Anweisungen dazu auszuführen:
zu bestimmen, ob ein Datenfeld (212), das eine in den Backup-Trackingdaten (207) beinhaltete erste Kennung (214) beinhaltet, einem bestehenden Datenfeld (212) entspricht, durch:
Vergleichen des in den Backup-Trainingdaten (207) beinhalteten Datensatzes mit Datenclustern, die durch K-Means-Clustering-Maschinenlernen unter Verwendung von Trackingdaten für unterschiedliche Fahrzeuge an dem Flughafen erzeugt werden;
als Antwort darauf, dass der Vergleich eine Übereinstimmung ergibt, zu bestimmen, dass das Datenfeld (212) ein gleiches Datenfeld ist, das in dem bestehenden Datenfeld (212) beinhaltet ist;
als Antwort darauf, dass das Datenfeld (212) dem bestehenden Datenfeld (212) entspricht, das bestehende Datenfeld (212) zu benutzen, um den zugeordneten Datensatz (216) zu erzeugen; und
als Antwort darauf, dass das Datenfeld (212) nicht dem bestehenden Datenfeld (212) entspricht, dem Datensatz (210), der das Datenfeld (212) beinhaltet, eine zweite Kennung (214) zuzuweisen.

6. Rechenvorrichtung (102, 202, 302) nach Anspruch 5, wobei der Prozessor (320) dazu konfiguriert ist, den zugeordneten Datensatz (216) unter Verwendung von mindestens einem von den Backup-Trackingdaten (207), den erzeugten Daten für das fehlende Datenfeld (212), dem Datensatz (210), der die erste Kennung (214) aufweist und dem Datensatz (210), der die zweite Kennung (214) aufweist, zu erzeugen.

7. Nichtflüchtiges computerlesbares Medium, das darauf gespeicherte computerlesbare Anweisungen aufweist, die von einem Prozessor (320) dazu ausführbar sind:
Trackingdaten für ein Fahrzeug (108) an einem Flughafen (100) zu empfangen, wobei die Trackingdaten primäre Trackingdaten (205) von einer primären Trackingquelle an dem Flughafen (100) beinhalten, die einen Datensatz (210) beinhalten, der eine Anzahl von Datenfeldern (212) beinhaltet, wobei die Anzahl von Datenfeldern (212) eine Trackingkennung für das Fahrzeug (108), ein Rufzeichen für das Fahrzeug (108) und einen Fahrzeugbewegungstyp für das Fahrzeug (108) beinhalten;
zu bestimmen, ob der in den primären Trackingdaten (205) beinhaltete Datensatz (210) ein fehlendes Datenfeld (212) aus der Anzahl von Datenfeldern (212) aufweist;
als Antwort auf das Bestimmen, dass der in den primären Trackingdaten (205) beinhaltete Datensatz (210) ein fehlendes Datenfeld (212) aufweist, Daten für das fehlende Datenfeld (212) über Maschinenlernen durch Folgendes zu erzeugen:
als Antwort auf das Bestimmen, ob das fehlende Datenfeld ein gleiches Datenfeld ist, das in einem zuvor aufgenommenen Datensatz (210) beinhaltet ist, zu bestimmen, dass das Fahrzeug (108) ein gleiches Fahrzeug ist, das einem zuvor empfangenen Datensatz (210-1) zugehörig ist; und als Antwort auf das Bestimmen, dass das Fahrzeug das gleiche Fahrzeug wie in dem zuvor gespeicherten Datensatz ist,
für das fehlende Datenfeld (212) unter Verwendung der primären Trackingdaten und der erzeugten Daten einen zugeordneten Datensatz (216) zu erzeugen und
antwortend auf eine Bestimmung, dass das Fahrzeug (108) nicht das gleiche Fahrzeug ist, das dem zuvor empfangenen Datensatz (210-1) zugehörig ist, das Erzeugen des zugeordneten Datensatzes (216) zu unterlassen und dem Datensatz (210) eine neue Kennung zuzuweisen.

8. Computerlesbares Medium nach Anspruch 7, wobei das Erzeugen der Daten für das fehlende Datenfeld (212) das Bestimmen, ob das fehlende Datenfeld (212) ein gleiches Datenfeld ist, das in einem zuvor empfangenen Datensatz (210) beinhaltet ist, über das K-Means-Clustering-Maschinenlernen beinhaltet.

9. Computerlesbares Medium nach Anspruch 8, wobei als Antwort auf das Bestimmen, dass das fehlende Datenfeld (212) das gleiche Datenfeld ist, das in dem zuvor empfangenen Datensatz (210) beinhaltet ist, der Prozessor (320) die Anweisungen dazu ausführen soll, zu bestimmen, ob das Fahrzeug, das den Trackingdaten, die den Datensatz (210) beinhalten, zugehörig ist, ein gleiches Fahrzeug ist, das dem zuvor empfangenen Datensatz (210) zugehörig ist, unter Verwendung von k-nächste-Nachbarn-(k-NN-)Maschinenlernen.

10. Computerlesbares Medium nach Anspruch 8, wobei als Antwort auf das Bestimmen, dass das fehlende Datenfeld (212) nicht das gleiche Datenfeld ist, das in dem zuvor empfangenen Datensatz (210) beinhaltet ist, der Prozessor (320) die Anweisungen dazu ausführen soll, einen Cluster zu erzeugen, der dem Datensatz (210) zugehörig ist.

11. Computerlesbares Medium nach Anspruch 7, wobei:
der zugeordnete Datensatz (216) dazu genutzt wird, mindestens eines von einem Standort des Fahrzeugs (108) an dem Flughafen (100), einem Bewegungstyp des Fahrzeugs (108) durch den Flughafen (100) und einem Freigabestatus des Fahrzeugs (108) zu tracken; und
der Prozessor (320) die Anweisungen dazu ausführen soll, über eine Benutzerschnittfläche mindestens eines von dem Standort des Fahrzeugs (108) an dem Flughafen (100), dem Bewegungstyp des Fahrzeugs (108) durch den Flughafen (100) und dem Freigabestatus des Fahrzeugs (108) anzuzeigen.

## Revendications

1. Dispositif informatique (102, 202, 302) de suivi de véhicule, comprenant :
une mémoire (322) ; et
un processeur (320) configuré pour exécuter des instructions stockées dans la mémoire (322) pour :
recevoir des données de suivi pour un véhicule (108) au niveau d'un aéroport (100), dans lequel les données de suivi incluent des données de suivi primaires (205) provenant d'une source de suivi primaire au niveau de l'aéroport (100) incluant un enregistrement de données (210) incluant un nombre de champs de données (212), le nombre de champs de données (212) incluant un identifiant de suivi pour le véhicule (108), un indicatif d'appel pour le véhicule (108) et un type de déplacement de véhicule pour le véhicule (108) ;
en réponse à la réception des données de suivi primaires (205), déterminer si le véhicule (108) est activement suivi en utilisant les données de suivi primaires (205) ;
déterminer si l'enregistrement de données (210) inclus dans les données de suivi primaires (205) a un champ de données manquant ;
générer, en réponse à la détermination que l'enregistrement de données (210) inclus dans les données de suivi primaires (205) a un champ de données manquant (212), des données pour le champ de données manquant (212) via un apprentissage automatique en :
déterminant, en réponse au fait de déterminer si le champ de données manquant est un même champ de données inclus dans un enregistrement de données enregistré précédemment (210-1), que le véhicule (108) est un même véhicule associé à un enregistrement de données reçu précédemment (210-1) ; et en réponse à la détermination que le véhicule est le même véhicule que dans l'enregistrement de données stocké précédemment,
générer un enregistrement de données mappé (216) en utilisant les données de suivi primaires (205) et les données générées pour le champ de données manquant (212) ; et
s'abstenir de générer l'enregistrement de données mappé (216) et attribuer un nouvel identifiant à l'enregistrement de données (210) en réponse à une détermination que le véhicule (108) n'est pas le même véhicule associé à l'enregistrement de données reçu précédemment (210-1).

2. Dispositif informatique (102, 202, 302) selon la revendication 1, dans lequel le processeur (320) est configuré pour exécuter les instructions pour générer, en réponse à la détermination que l'enregistrement de données (210) inclus dans les données de suivi primaires (205) a le champ de données manquant (212), les données pour le champ de données manquant (212) en :
déterminant que le champ de données manquant (212) est un même champ de données (212) inclus dans un enregistrement de données reçu précédemment (210-1) sur la base d'une comparaison produisant une correspondance, dans lequel la comparaison est effectuée entre l'enregistrement de données (210) et des groupes de données générés par regroupement des K-moyennes en apprentissage automatique utilisant l'enregistrement de données reçu précédemment (210-1) ;
déterminant que le véhicule (108) étant suivi est un même véhicule associé à l'enregistrement de données reçu précédemment (210-1) sur la base d'une détermination, en utilisant l'algorithme k-NN en apprentissage automatique, que l'aéronef associé à l'enregistrement de données reçu précédemment (210-1) est la meilleure correspondance pour le véhicule (108) ; et
utilisant le même champ de données (212) pour générer des données pour le champ de données manquant (212).

3. Dispositif informatique (102, 202, 302) selon la revendication 1, dans lequel la réception des données de suivi inclut la réception de données de suivi de secours (207) incluant un enregistrement de données (210) provenant d'une source de données de suivi de secours au niveau de l'aéroport (100) et en réponse à la réception des données de suivi de secours (207), le processeur (320) est configuré pour exécuter les instructions pour déterminer si le véhicule (108) est suivi de manière active en utilisant les données de suivi de secours (207).

4. Dispositif informatique (102, 202, 302) selon la revendication 3, dans lequel le processeur (320) est configuré pour exécuter les instructions pour :
déterminer si l'enregistrement de données (210) inclus dans les données de suivi de secours (207) a un champ de données manquant (212), dans lequel l'enregistrement de données (210) inclut un premier identifiant (214) ; et
en réponse à la détermination que l'enregistrement de données (210) inclus dans les données de suivi de secours (207) a un champ de données manquant (212), générer des données pour le champ de données manquant (212) en :
déterminant qu'un champ de données (212) incluant un premier identifiant (214) inclus dans les données de suivi de secours (207) correspond à un champ de données existant (212) sur la base d'une comparaison produisant une correspondance, dans lequel la comparaison est effectuée entre l'enregistrement de données inclus dans les données d'entraînement de secours (207) et des groupes de données générés par regroupement des K-moyennes en apprentissage automatique en utilisant des données de suivi pour différents véhicules au niveau de l'aéroport ;
en réponse au fait que le champ de données (212) correspond au champ de données existant (212), utiliser le champ de données existant (212) pour générer des données pour l'enregistrement de données mappé (216).

5. Dispositif informatique (102, 202, 302) selon la revendication 4, dans lequel le processeur (320) est configuré pour exécuter les instructions pour :
déterminer si un champ de données (212) incluant un premier identifiant (214) inclus dans les données de suivi de secours (207) correspond à un champ de données existant (212) en :
comparant l'enregistrement de données inclus dans les données d'entraînement de sauvegarde (207) aux groupes de données générés par regroupement des K-moyennes en apprentissage automatique en utilisant des données de suivi pour différents véhicules au niveau de l'aéroport ;
en réponse au fait que la comparaison produit une correspondance, déterminer que le champ de données (212) est un même champ de données inclus dans le champ de données existant (212) ;
en réponse au fait que le champ de données (212) correspond au champ de données existant (212), utiliser le champ de données existant (212) pour générer l'enregistrement de données mappé (216) ; et
en réponse au fait que le champ de données (212) ne correspond pas au champ de données existant (212), attribuer un deuxième identifiant (214) à l'enregistrement de données (210) incluant le champ de données (212).

6. Dispositif informatique (102, 202, 302) selon la revendication 5, dans lequel le processeur (320) est configuré pour générer l'enregistrement de données mappé (216) en utilisant au moins l'un parmi les données de suivi de secours (207), les données générées pour le champ de données manquant (212), l'enregistrement de données (210) ayant le premier identifiant (214) et l'enregistrement de données (210) ayant le deuxième identifiant (214).

7. Support non transitoire lisible par ordinateur stockant des instructions lisibles par ordinateur qui sont exécutables par un processeur (320) pour :
recevoir des données de suivi pour un véhicule (108) au niveau d'un aéroport (100), dans lequel les données de suivi incluent des données de suivi primaires (205) provenant d'une source de suivi primaire au niveau de l'aéroport (100) incluant un enregistrement de données (210) incluant un nombre de champs de données (212), le nombre de champs de données (212) incluant un identifiant de suivi pour le véhicule (108), un indicatif d'appel pour le véhicule (108) et un type de déplacement de véhicule pour le véhicule (108) ;
déterminer si l'enregistrement de données (210) inclus dans les données de suivi primaires (205) a un champ de données manquant (212) à partir du nombre de champ de données (212) ;
en réponse à la détermination que l'enregistrement de données (210) inclus dans les données de suivi primaires (205) a un champ de données manquant (212), générer des données pour le champ de données manquant (212) via un apprentissage automatique en :
déterminant, en réponse au fait de déterminer si le champ de données manquant est un même champ de données inclus dans un enregistrement de données enregistré précédemment (210), que le véhicule (108) est un même véhicule associé à un enregistrement de données reçu précédemment (210-1) ; et en réponse à la détermination que le véhicule est le même véhicule que dans l'enregistrement de données stocké précédemment,
générer un enregistrement de données mappé (216) en utilisant les données de suivi primaires et les données générées pour le champ de données manquant (212) et
s'abstenir de générer l'enregistrement de données mappé (216) et attribuer un nouvel identifiant à l'enregistrement de données (210) en réponse à une détermination que le véhicule (108) n'est pas le même véhicule associé à l'enregistrement de données reçu précédemment (210-1).

8. Support lisible par ordinateur selon la revendication 7, dans lequel la génération des données pour le champ de données manquant (212) inclut le fait de déterminer si le champ de données manquant (212) est un même champ de données inclus dans un enregistrement de données reçu précédemment (210) via le regroupement des K-moyennes en apprentissage automatique.

9. Support lisible par ordinateur selon la revendication 8, dans lequel en réponse à la détermination que le champ de données manquant (212) est le même champ de données inclus dans l'enregistrement de données reçu précédemment (210), le processeur (320) doit exécuter les instructions pour déterminer si le véhicule associé aux données de suivi incluant l'enregistrement de données (210) est un même véhicule associé à l'enregistrement de données reçu précédemment (210) en utilisant l'algorithme des k plus proches voisins (k-NN) en apprentissage automatique.

10. Support lisible par ordinateur selon la revendication 8, dans lequel en réponse à la détermination que le champ de données manquant (212) n'est pas le même champ de données inclus dans l'enregistrement de données reçu précédemment (210), le processeur (320) doit exécuter les instructions pour générer un groupe associé à l'enregistrement de données (210).

11. Support lisible par ordinateur selon la revendication 7, dans lequel :
l'enregistrement de données mappé (216) est utilisé pour suivre au moins l'un parmi un emplacement du véhicule (108) au niveau de l'aéroport (100), un type de déplacement du véhicule (108) à travers l'aéroport (100) et un état d'autorisation du véhicule (108) ; et
le processeur (320) doit exécuter les instructions pour afficher, via une interface utilisateur, au moins l'un parmi l'emplacement du véhicule (108) au niveau de l'aéroport (100), le type de déplacement du véhicule (108) à travers l'aéroport (100) et l'état d'autorisation du véhicule (108).
